# EUROPEAN PATENT APPLICATION

(11) **EP 1 001 368 A2**
(43) Date of publication of application: **17.05.2000**
(21) Application number: 99309028.1
(22) Date of filing: 12.11.1999
(51) Int. Cl.: G06T 1/00

(54) **Technique for superimposing and transmitting digital watermark information**

(30) Priority: 13.11.1998 JP 32427398
(71) Applicant: SONY CORPORATION, Tokyo 141 (JP)
(72) Inventor: Ogino, Akira, c/o Intellectual Property Dept., Tokyo 141 (JP); Nakamura, Masashi, c/o Intellectual Property Dept., Tokyo 141 (JP)
(74) Representative: Horner, David Richard

(57) **Abstract**

A method and apparatus for superimposing digital watermark information to a video signal are provided. The method comprises the steps of determining before conversion a format of a video signal that is to have digital watermark information superimposed thereon and determining a format of the video signal after conversion from said video signal before conversion. A unit block size of the video signal before conversion is then determined that includes a whole number of pixels in both the horizontal and vertical directions so that when said video signal before conversion is converted to the format of the video signal after conversion, a resulting unit block size of said video signal after conversion also includes a different whole number of pixels in both the horizontal and vertical directions. The conversion is accompanied selectively by an interpolating process or a thinning process in the horizontal direction or the vertical direction or a time direction between consecutive frames or fields.

## Description

### BACKGROUND OF THE INVENTION

### Field of the Invention

The present invention relates to a digital watermark information superimposing method and digital watermark information transmitting method for detecting digital watermark information superimposed on a supplied video or other signal. The digital watermark information is transmitted by superimposing the digital watermark information on the video signal in such a manner to not be recognized as digital watermark information during reproduction of the supplied video signal. The invention also relates to a digital watermark information superimposing apparatus, authoring apparatus and video signal output apparatus which uses the method of the invention.

### Description of the Related Art

Recently developed technology has allowed large amounts of information to be distributed through video tapes, digital video disks (DVD), the Internet, broadcast media and the like. Infringement of the copyright in this information by illegal duplication (copying) of this distributed information has become a serious problem.

Various protection methods have been considered in order to overcome this copying problem. In one method, information and copyright information for controlling duplication are added to recorded video information and the like so that illegal duplication of the recorded information can be prevented using this additional copyright information. Searching may then be performed to find dealers who are illegally duplicating the recorded information. This copyright information may be added to the recorded information through a digital watermark process by burying watermark information as noise in a part of the signal of the recorded information which is not important to the perception of the video data or music data by a person. The additional information buried in the video data and music data by such a digital watermark process cannot be easily removed from such video data and music data by an individual not knowledgeable about how the information was first buried in the signal. On the other hand, even after filtering processing and data compression processing are performed to the video data and music data, the buried additional digital watermark information must still be present in the video data and music data. This data can then be extracted by designated individuals. The digital watermark information can thus be superimposed on the recorded information to prevent removal of the copyright information. Because the digital watermark information superimposed on the contents information can be extracted by designated individuals, illegal duplication of recorded information can be prevented.

A high definition television system formatted video signal (hereinafter, referred to as HDTV system) providing a high definition video image is coming into more common use, in addition to the existing standard definition formatted television system (hereinafter referred to us SDTV system). The video signal of an SDTV system includes 480 lines in the vertical direction and 720 pixels in the horizontal direction forming one frame. On the other hand, the video signal of the HDTV system includes 1080 lines in the vertical direction and 1920 pixels in the horizontal direction.

The video signal of an HDTV system can be converted to a video signal of an SDTV system by thinning out and reducing the lines in the vertical direction and pixels in the horizontal direction. The video signal of an SDTV system can similarly be converted to the video signal of an HDTV system by increasing the number of lines in the vertical direction and the number of pixels in the horizontal direction. However, when duplication control information is superimposed as a digital watermark information on the video signal of an HDTV system, this superimposed digital watermark signal is deformed when the video signal is converted to a video signal of an SDTV system. It is therefore difficult to accurately detect the digital watermark information from the video signal after such signal conversion. Similarly, when duplication control information is superimposed as a digital watermark information on the video signal of an SDTV system, if this video signal is converted to that of an HDTV system, the digital watermark information is deformed. It is therefore also difficult to accurately detect the digital watermark information from the video signal after such signal conversion.

This deformation phenomenon may result not only during signal conversion between the video signal of an HDTV system and the video signal of an SDTV system, but also in the signal conversion, for example, of a video signal of an NTSC system to that of a PAL system, or to that of a SECAM system and vice versa. Because after such conversion the superimposed duplication control information cannot be detected accurately from the signal, it becomes possible to illegally duplicate the video signal without regard to the duplication control signal.

### SUMMARY OF THE INVENTION

Aspects of the present invention are set out in the accompanying claims.

In accordance with the invention, a digital watermark information superimposing method for superimposing a digital watermark information onto a video signal that is to be subjected to signal conversion, including an interpolation process or thinning process in the horizontal direction or vertical direction or time direction in each frame or field is provided. In accordance with the invention, the digital watermark information is superimposed onto the video signal taking into account the current format of the signal and the format into which the signal is to be converted.

Hence, the present invention provides an improved digital watermark information superimposing method, digital watermark information transmitting method, digital watermark information superimposing apparatus, video signal output apparatus, video signal reproducing apparatus and video recording medium which enables simplified and accurate detection of digital watermark information superimposed on a video signal before and after conversion of the signal from one format to another.

According to a typical digital watermark information superimposing method, for example, when a video signal of an HDTV system is to be converted to a video signal of an SDTV system or a video signal of an SDTV system is to be converted to a video signal of an HDTV system, the line thinning and interpolation in the vertical direction and pixel thinning and interpolation in the horizontal direction are performed after the digital watermark information has been superimposed on the video signal. After signal conversion, the digital watermark information superimposed on the video signal is deformed, disabling detection of the digital watermark information from the converted video signal.

Therefore, in accordance with the invention, digital watermark information is superimposed on the video signal before the conversion of the video signal taking into consideration the assumed format that the video signal will be converted to. Accordingly, the digital watermark information superimposed on the video signals before signal conversion can be detected either before or after conversion without missing any of the digital watermark information.

In the digital watermark information superimposing method of preferred embodiments of the present invention, a small area of one part of one image of the video signal is defined as one unit block. The image is divided up to define a plurality of such unit blocks, each pixel of the image belonging to a unit block. The digital watermark information is superimposed within this unit block. After signal conversion, this block is composed of a whole number of m pixels (in the latent direction) x n pixels (in the vertical direction). The digital watermark information is superimposed in each unit block defined within the video signal. In this case, the size of a unit block defined in the video signal before signal conversion is determined so that the number of pixels m in the horizontal direction x the number of pixels n in the vertical direction of the unit block in the video signal after signal conversion become a whole number. Thus, even after the video signal has been converted, the size of the unit block does not become irregular. The number of pixels in the horizontal direction and vertical direction of unit block in the video signal after signal conversion is a whole number such that the size of the unit block is a predetermined size. Accordingly, the digital watermark information superimposed on the video signal before signal conversion can be accurately detected without changing the meaning of the digital watermark information.

Moreover, in the digital watermark information superimposing method of preferred embodiments of the invention, the digital watermark information superimposed in every block unit comprises a spread spectrum signal which is formed by utilizing a spread code of one chip assigned in every block. The spread spectrum signal including the digital watermark information is formed by assigning the spread code of one chip in every block unit of the image and then performing a spectrum spreading procedure using such spread code. Thereby, the video signal can be transmitted including the spread spectrum information superimposed thereon. When the information superimposed on the video signal through the spectrum spreading process is to be detected, an inverse spreading process is performed using the same spread code. Thereby, the information superimposed on the video signal through the spectrum spreading process can be accurately detected.

According to the digital watermark information superimposing method of preferred embodiments of the present invention, even when a high definition television signal is converted to a standard television signal or a standard television signal is converted to a high definition television signal, the digital watermark information can be accurately detected from the video signal either before or after signal conversion. According to this digital watermark information superimposing method of preferred embodiments of the present invention, for example, even when a television signal of an NTSC system is convened to a television signal of another system, or when a television signal of another system other than the NTSC system is converted to a television signal of the NTSC system, the digital watermark information can be accurately detected from any video signal before and after the signal conversion.

In the digital watermark superimposing method of embodiments of the invention, a plurality of digital watermark information pieces for use with respective different formats to which the signal is to be converted can be superimposed simultaneously on different portions of the video signal. Respective digital watermark information pieces formed corresponding to the plurality of different formats are superimposed in every area of the image in a space multiplex division format or in a time multiplex division format of the video signal. Accordingly, even when the video signal is to be converted to video signals of a plurality of different formats, the digital watermark information superimposed to the video signal before signal conversion can be accurately detected from the video signal after signal conversion.

Moreover, in the digital watermark information superimposing method of embodiments of the invention, different spread codes corresponding to each of a plurality of different formats into which the video signal is to be converted may be used for performing the spreading process to the video signal to include the watermark information. Thus, even when the video signal is converted to one or more of a plurality of different formats, the digital watermark information superimposed on the video signal before signal conversion can be accurately detected from the video signal after signal conversion.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram depicting an authoring apparatus constructed in accordance with a first embodiment of the invention;
Fig. 2 is a block diagram depicting a PN generator of the authoring apparatus illustrated in Fig. 1;
Fig. 3 is a block diagram depicting a PN repeator of the authoring apparatus illustrated in Fig. 1;
Fig. 4 is a diagram depicting a spread spectrum signal to be superimposed to a video signal in the authoring apparatus illustrated in Fig. 1;
Figs. 5A and 5B depict the spread spectrum signal superimposing method of an embodiment of the invention as applied by the authoring apparatus illustrated in Fig. 1.
Figs. 6A to 6F depict formation of a spread spectrum signal in accordance with an embodiment of the invention to be superimposed on a video signal;
Figs. 7A to 7D depict the relationship among information signal, duplication control signal and spread spectrum duplication control information;
Fig. 8 is a block diagram depicting a video signal reproducing apparatus constructed in accordance with an embodiment of the invention to reproduce a video signal recorded on a recording medium by the authoring apparatus of Fig. 1;
Fig. 9 is a diagram depicting a watermark decoder of the video signal reproducing apparatus illustrated in Fig. 8;
Fig. 10 is a block diagram depicting a video signal recording apparatus for recording to a recording medium a video signal reproduced and output from the video signal reproducing apparatus illustrated in Fig. 8;
Fig. 11 depicts the spread spectrum signal superimposing method and spread spectrum signal detecting method of an embodiment of the invention where the signal is converted to a video signal having different frame rate;
Fig. 12 depicts a profile of a spread spectrum signal for being superimposed on a video signal;
Fig. 13 depicts another profile of a spread spectrum signal for being superimposed on a video signal;
Fig. 14 depicts another profile of a spread spectrum signal for being superimposed on a video signal;
Figs. 15A and 15B depict a spread spectrum signal superimposing method in accordance with an embodiment of the invention as applied by the authoring apparatus illustrated in Fig. 1; and
Fig. 16 depicts an additional digital watermark information format to be superimposed on a video signal in accordance with an embodiment of the invention.

### DESCRIPTION OF THE PREFERRED EMBODIMENTS

Making reference to the accompanying drawings, embodiments of a digital watermark information superimposing method, digital watermark information transmitting method, digital watermark information superimposing apparatus, authoring apparatus and video signal output apparatus in accordance with to invention will be explained.

In the embodiments explained below, an authoring apparatus is a video signal recording apparatus used by a contents information provider who provides content information such as video signals by recording these signals to a digital versatile disk (hereinafter referred to as DVD) or other comparable recording medium. When the video signal is recorded to a DVD, the authoring apparatus of the invention superimposes duplication control information on the video signal as a digital watermark information to aid in the prevention of illegal duplication of the recorded video signal. Therefore, illegal duplication of the relevant video signal can be prevented by requiring detection of the digital watermark information by a reproducing apparatus, and performing appropriate duplication control depending on the detected duplication control information.

The authoring apparatus, DVD reproducing apparatus and DVD recording apparatus of the embodiments of the invention explained below are also capable of recording and reproducing an audio signal in addition to the video signal. Explanation of the audio system will be omitted to simplify the explanation. For the discussion below, a recording apparatus and a reproducing apparatus that can operate according to a duplication generation limiting process based on recorded duplication control information are considered compliant apparatuses, while apparatuses not able to operate according to the duplication generation limiting process are called non-compliant apparatuses.

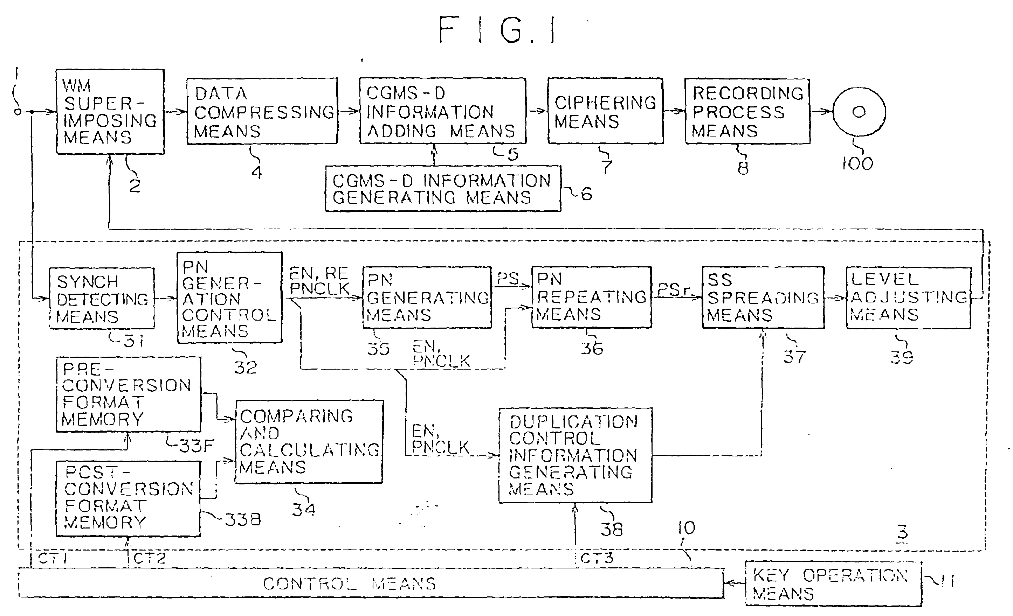

Referring first to Fig. 1, an authoring apparatus is constructed in accordance with a first embodiment of the invention to which a video signal output apparatus of the present invention is applied. As is shown in Fig. 1, the authoring apparatus of an embodiment of the invention comprises a video signal input terminal 1, a digital watermark superimposing means (hereinafter referred to as WM superimposing means) 2, a digital watermark information forming means (hereinafter referred to as WM forming means) 3, a data compression process means 4, a CGMS-D information adding means 5, a CGMS-D information generating means 6, a ciphering means 7, a recording process means 8, a control means 10 and a key manipulating means 11. WM forming means 3 comprises a synch detecting means 31, a PN (Pseudorandom Noise) generation control means 32, a pre-signal conversion format memory 33F, a post-signal conversion format memory 33B, a comparison and calculation means 34, a PN generating means 35, a PN repeating means 36, a spectrum spreading means (hereinafter referred to as SS means) 37, a duplication control information generating means 38 and a level adjusting means 39. Control means 10 is a microcomputer provided with CPU, ROM and RAM or the like to control cach means of the depicted authoring apparatus. Key manipulating means 11 is connected to control means 10 and accepts instruction input from an operator of this authoring apparatus. Control means 10 forms a control signal depending on the instruction input front an operator input through key manipulating means 11 and then supplies this control signal to each of the required elements in the authoring apparatus in order to perform a process depending on the instruction of an operator.

An operator of this authoring apparatus inputs information indicating the format of the input video signal through key manipulating means 11 and information indicating the assumed signal conversion i.e., the format to which the input video signal is most likely to be converted, in order to start the process for recording the video signal input through input terminal 1 to a DVD100. Here, the information indicating the format of the video signals suggest, for example, whether the input video signal is a video signal of an HDTV system having 1920 pixels in the horizontal direction and 1089 lines in the vertical direction forming one frame and 60 frames per second (hereinafter, only referred to as a video signal of an HDTV system). The format may also indicate that the format of the video signal is that of a non-interlaced video signal of an SDTV system having 480 horizontal scanning lines, 720 pixels in the horizontal direction and 60 frames per second is 60 (hereinafter, only referred to as video signal of SDTV system), or may indicate that the format of the video signal is that of a non-interlaced video signal having 480 pixels in the horizontal direction, 525 horizontal scanning lines and 60 frames per second (hereinafter, referred to as 525P video signal). Moreover, the information indicating the assumed signal conversion indicates the likely format the signal is to be converted to. When the input video signal is, for example, the HDTV system video signal, such assumed conversion information may indicate a signal conversion to the SDTV system video signal or a 525P video signal.

For explanation only, the input video signal is assumed to be an HDTV system video signal and the format the input signal is to be converted to is assumed to be an SDTV system video signal. Because the information indicating the format of the input video signal indicates a video signal of an HDTV system, control means 10 forms and supplies a control signal CT1 to control pre-signal conversion format memory 33F to supply format information for the HDTV system video signal to comparison and calculation means 34. Because the information indicating the assumed signal conversion indicates a signal conversion from a HDTV system video signal to art SDTV system video signal, control means 10 forms and supplies a control signal CT2 to control post-signal conversion format memory 33B to supply format information of the SDTV system video signal to comparison and calculation means 34.

Pro-signal conversion format memory 33F stores format information for the different formats of the possible input video signal system. The format information for each video signal system is composed of information indicating the number of pixels in the horizontal direction, number of horizontal scanning lines, number of frames per image or sequence and an indication of the scanning system. Therefore, the format information for the HDTV system video signal, format information of the SDTV system video signal and format information of the 525P video signal are stored in pre-signal conversion format memory 33F corresponding to the information indicating the video signal system. Format information for the possible formats of the video signal after the signal conversion process is stored in post-signal conversion format memory 33B. Accordingly, the format information for the HDTV system video signal, format information for the SDTV system video signal and format information for the 525P video signal are stored in post-signal conversion format memory 33B.

During use, the format information corresponding to the HDTV system video signal (input video signal) is read from pre-conversion format memory 33F in accordance with control signal CT1 from control means 10 and is then supplied to comparison and calculation means 34. Similarly, format information corresponding to the SDTV system video signal is read from post-conversion format memory 33B and it is also supplied to comparison and calculation means 34. Comparison mmcl calculation means 34 determines a size of a unit block to which one chip of PN (Pseudorandom Noise) code is to be assigned according to the format information from pre-conversion format memory 33F and the format information from post-conversion format memory 33B.

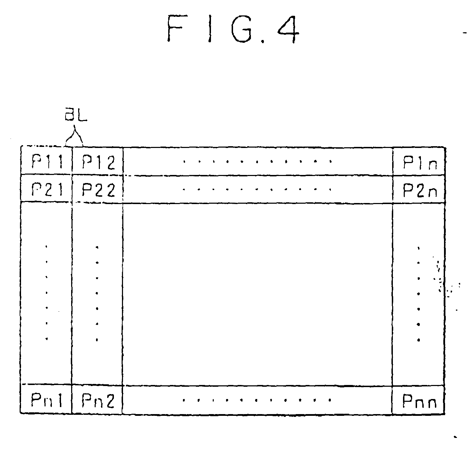

A spread spectrum signal including digital watermark information is formed for superimposing duplication control information on the video signal in accordance with the assigned PN code of each chip assigned to each respective unit block BL. Referring next to Fig. 4, the formation of a spread spectrum signal depending on the duplication control signal to be superimposed on the video signal is described. In the authoring apparatus of the invention, a first size of the unit block BL to which one chip of the PN code used for spectrum spreading is assigned is determined for each frame of the video signal to be recorded to DVD100. PN codes P11, P12, P13, ... of one chip each, are generated and assigned to cach unit block. The spread spectrum signal to be superimposed on the video signal is formed through spectrum spreading of the duplication control information in accordance with this PN code.

In comparison and calculation means 34, a size of the unit block is determined on the basis of the format information of the video signal, and also considering the format that the video signal is to be converted to so that the spread spectrum signal superimposed on the video signal before signal conversion can be accurately detected from the video signal after signal conversion.

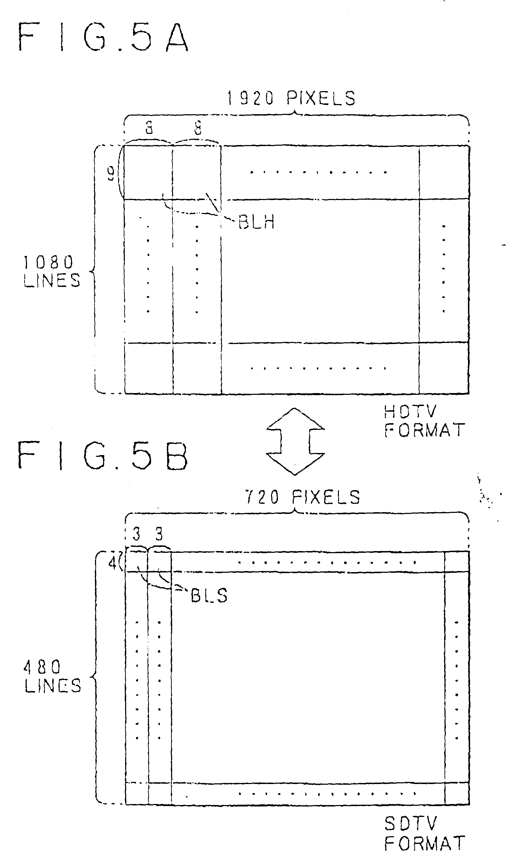

Figs. 5A and 5B depict the process for determining a size of a unit block to which one chip of PN code is assigned in the input video signal before signal conversion is performed. This determination is made on the basis of the format information of the video signal supplied from pre-conversion format memory 33F and post-conversion format memory 33B. In the input video signal of an HDTV system video signal, as illustrated in Fig. 5A, the number of pixels in the horizontal direction x number of horizontal scanning lines x number of frames per second = 1920 x 1080 x 60. When this input video signal is to be converted to the video signal of SDTV system, the number of pixels of the resulting video signal in the horizontal direction x number of horizontal scanning lines x number of frames per second = 480 x 720 x 60 as illustrated in Fig. 5B. The HDTV system video signal is therefore thinned in its lines in the vertical direction and pixels in the horizontal direction for the conversion to an SDTV system video signal. A size of the unit block of the input video signal to which one chip of the PN code is assigned is determined, considering the number of lines and number of pixels to he thinned.

For example, in Fig. 5, the spread spectrum signal is formed by spectrum spreading the duplication control information through assignment of one chip of the PN code to each unit block consisting of 2.67 pixels x 2.25 pixels in the number of horizontal pixels x number of vertical pixels. Once this spread spectrum signal is superimposed on a HDTV system video signal, if the HDTV system video signal is then converted to a SDTV system video signal, the spread spectrum signal superimposed on the video signal after signal conversion can also be detected therefrom by performing an inverse spreading operation by generating a PN code in which the inverse spread spectrum operation is performed by defining the unit block as one horizontal pixel x one vertical pixel. However, because it is also required that the spread spectrum signal can be detected from the video signal before signal conversion (i.e., the HDTV signal), it is desirable that the number of pixels in the horizontal direction and the number of pixels in the vertical direction of the unit block in the video signal before signal conversion are also whole numbers (positive integer).

Therefore, in accordance with an embodiment of the invention, when an HDTV system video signal is to be convened to an SDTV system video signal, a unit block for the HDTV system video signal before conversion is defined as a block consisting of 8-pixels x 9-pixels and one chip of the PN code is assigned to the unit block BLH of 8-pixels x 9-pixels. When the HDTV system video signal is converted to the SDTV system video signal, a unit block in the SDTV system video signal after signal conversion is a 3-pixel x 4-pixel unit block BLS, as shown in Fig. 5B. Accordingly, the spread spectrum signal that has been superimposed on the HDTV video signal can be detected accurately from the SDTV video signal after signal conversion by performing an inverse spread operation through assignment of one chip of the PN code (PN cock for inverse conversion) as the PN code used for the spread spectrum for each unit block BLS of 3-pixel x 4-pixel.

Comparison and calculation means 34 supplies, to PN generation control means 32, information regarding the number of pixels "m" in the horizontal direction and the number of pixels "n" in the vertical direction of the determined unit block for the video signal before conversion. This number of pixels n in the vertical direction indicates, as explained later, the number of times the PN code stream used for spectrum spreading is repeated in the vertical direction, while the number of pixels m in the horizontal direction indicates the number of pixels in die horizontal direction of the unit block BLH to which the PN code of one chip is assigned.

In the authoring apparatus of this embodiment illustrated in Fig. 1, the digital video signal to be recorded to DVD100 is supplied, through input terminal 1, to WM superimposing means 2 and synch detecting means 31 of WM forming means 3. The input digital video signal is a so-called baseband signal before data compression including a vertical synch timing signal V and a horizontal synch timing signal H. Synch detecting means 31 detects the vertical synch timing signal V and the horizontal synch timing signal H from the supplied video signal. These detected outputs are then supplied to PN generation control means 32.

Using the vertical synch timing signal V and the horizontal synch timing signal H as reference signals, and based on the number of pixels m in the horizontal direction and number of pixels n in the vertical direction of the unit block BLH as defined by, and received from the comparison and calculation means 35, PN generation control means 32 generates a PN code reset timing signal RE (hereinafter referred to as reset signal RE) indicating the PN code generation start timing, a PN generation enable signal EN indicating the section for generating the PN code and a clock signal PNCLK.

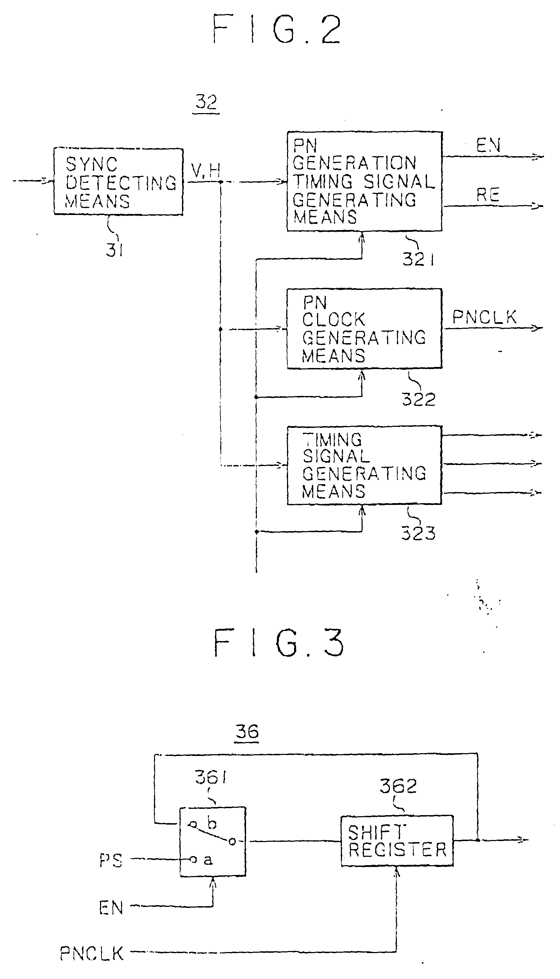

Fig. 2 is a block diagram depicting the structure of PN generation control means 32 of an embodiment of the invention. As illustrated in Fig. 2, PN generation control means 32 comprises a PN generation timing signal generating means 321, a PN block generating means 322 consisting of a PLL (Phase Locked Loop) and a timing signal generating means 323. The horizontal synch timing signal H and vertical synch timing signal V are supplied from synch detecting means 31 to PN generation timing signal generating means 321 and timing signal generating means 323. The horizontal synch timing signal H is also supplied from synch detecting means 31 to PN clock generating means 322. The information indicating the number of pixels m in the horizontal direction of the unit block BLH and the number of pixels n in the vertical direction is supplied to PN generation timing signal generating means 321, PN clock generating means 322 and timing signal generating means 323, from the comparison and calculation means.

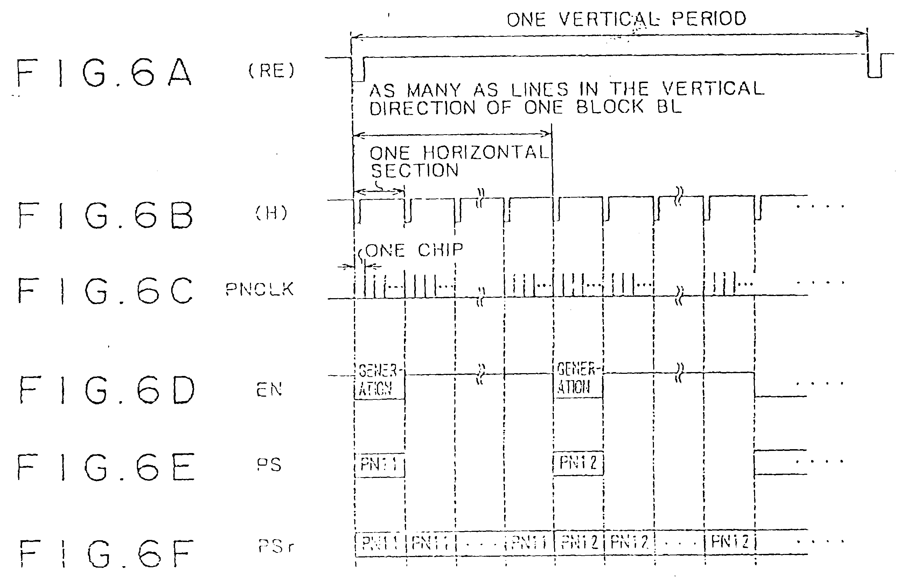

PN generation timing signal generating means 321 generates reset signal RE of the vertical period to determine the repetition frequency of the PN code stream for the spreading process to be used for the spectrum spreading operation as illustrated in Fig. 6A, using the vertical synch timing signal V as the reference signal. In this example, the reset signal RE is the signal indicating the length of the vertical period (one frame period) which falls, for example, at the front edge of the vertical synch timing signal V. PN generation timing signal generating means 321 also generates PN generation enable signal EN using the horizontal synch timing signal H (refer to Fig. 6B) as the reference signal. The PN generation enable signal EN is the signal used to generate the PN code stream in PN generating means 35 only in the first horizontal line among the number of lines n (n=9 horizontal lines in this example) in the vertical direction of the unit block BLH. As illustrated in Fig. 6D, this PN generation enable signal EN is a low active signal.

PN clock generating means 322 generates, using the PLL, the PN clock PNCLK (refer to Fig. 6C) which is synchronized with the horizontal synch timing signal II and has a period corresponding to each pixel of the unit block BLH. The PN clock PNCLK determines the chip period of the spreading code. Timing signal generating means 323 generates various pieces of a timing signal used in the authoring apparatus of Fig. 1 in accordance with the vertical synch timing signal V and horizontal synch timing signal H.

PN generating means 35 (Fig. 1) generates the PN code in accordance with the clock signal PNCLK, enable signal EN and reset signal RE. PN generating means 35 is reset in the vertical period by reset signal RE to generate the PN code stream of the predetermined code pattern from its beginning after each reset. PN generating means 35 generates the PN code stream PS when the clock signal PNCLK is in the PN code generation enabling condition (enable condition) by way of the enable signal EN.

Because PN generating means 35 is capable of generating the PN code when the enable signal EN is low level, the PN code can be generated in the first one horizontal line among 9 horizontal lines in the vertical direction of one block as illustrated in Fig. 6D. The PN code is generated at the rate at one chip per clock of cycle clock PNCLK. Because PN generating means 35 is not reset within each vertical section frame, in each unit block in the horizontal direction of the same vertical line, a different PN code is generated and repeated for each horizontal section of the same block (see Fig. 6E, PN11 for all of the horizontal sections of the first block, PN12 for all of the horizontal sections of the second block, ... etc). PN generating means 35 is designed to generate the M-series PN code stream PS based on the enable signal EN, PN clock signal PNCLK and reset signal RE. PN generating means 35 is also provided with a shift register of many stages and several exclusive OR circuits to calculate adequate tap outputs from this shift register.

PN code stream PS as generated from PN generating means 35 is supplied to PN repeating means 36 (Fig. 1). The enable signal EN and clock PNCLK from PN generation control means 32 are also supplied to PN repeating means 36. Fig. 3 depicts the structure of PN repeating means 36 in accordance with a preferred embodiment of the invention. Namely, PN repeating means 36 includes a switch circuit 361 and a shift register 362 having its number of stages equal to the number of chips of the PN codes within one horizontal period. PN code stream PS is supplied to one input "a" of switch circuit 361, while an output of the shift register 362 is supplied to the other input "b". The enable signal EN is supplied as the switching signal of switch circuit 361. Therefore, switch circuit 361 is switched to the input "a" side when the enable signal EN is at a low level and the PN code stream PS is being generated. Switch circuit 361 is switched to the input "b" side when the enable signal EN is at a high level and the PN code stream PS is not being generated. The clock PNCLK is supplied to the shift register 362 as the shift clock.

Therefore, the PN code steam PS consisting of PN codes PN11, PN12, PN13, ... are generated at the first horizontal section in each unit block BLH in a single vertical period is respectively transferred to shift register 362 via switch circuit 361 by PN generating means 35. In the remaining horizontal sections in each unit block BL because PN code stream PS from PN generating means 35 is removed, and switch circuit 361 is switched to the input "b" side, thus receiving the output from shift register 362, the shift register repeatedly outputs the same PN codes PN11, PN12, PN13, ... for the full time of each horizontal section of each block.

Thus, the PN code stream generated in the first horizontal line of nine horizontal lines in the vertical direction are repeated in the subsequent next horizontal section in each block in PN generating means 35. PN code stream PSr in which the PN codes PN11, PN12, PN13, ... are continuous in the nine horizontal lines are generated in each block BL as illustrated in Fig. 6F. One chip of PN code stream PS is assigned to each one block. PN code stream PSr generated by die PN repeating means 36 is supplied to SS spreading means 37. The duplication control information stream FS is also supplied to SS spreading means 37 from duplication control information generating means 38.

Based on the clock PNCLK duplication control information generating means 38 generates the duplication control information stream FS as the additional information to be superimposed through a spectrum spreading operation on the video signal input via input terminal 1 in accordance with the timing of enable signal EN from PN generation control means 32. This information stream FS is then output from duplication control information generating means 38 to SS spreading means 37 based upon clock PNCLK, and forms duplication control information stream FS with die saute timing as PN code stream PSr. The selection of duplication control information to be generated in duplication control information generating means 38 is controlled by control signal CT3 from control means 10. Information having a low bit rate is generated as the duplication control information indicating the duplication control condition such as duplication possible, duplication impossible, duplication possible only once (duplication possible for the specified generation) and free duplication.

SS spreading means 37 performs the spectrum spreading operation on duplication control information stream FS using the PN code stream PSr to form the spread spectrum signal (SS duplication control information). This information is then superimposed on the input video signal. The spread spectrum signal formed by SS spreading means 37 is then supplied to WM superimposing means 2 via level adjusting means 39. Level adjusting means 39 first adjusts the superimposing level of the spread spectrum signal in order to prevent deterioration of an image to be reproduced in accordance with the relevant video signal. Level adjusting means 39 adjusts the level of the spread spectrum signal so that it can be superimposed at the level lower than the dynamic range of the video signal. The level adjusted spread spectrum signal is then supplied to die WM superimposing means 2. In WM superimposing means 2, the spread spectrum signal (SS duplication control information) is superimposed on the video signal supplied via the input terminal 1. The video signal and superimposed spread spectrum signal 2 is then supplied to a data compression processing means 4.

Data compression processing means 4 compresses the data of the supplied video signal in accordance with the MPEG system. The compressed video signal is then supplied to CGMS-D information adding means 5 in order to have duplication control information in accordance with the CGMS (Copy Generation Management System) system added thereto. When the video signal is an analog signal, two bits of additional information for duplication control are superimposed on one particular horizontal section of the vertical blanking period. When the video signal is a digital signal, the two bits of additional information for duplication control (hereinafter, referred to as CGMS information) are added to the signal. CGMS-D information adding means 5 adds the CGMS information supplied from CGMS-D generating means 6 to the data-compressed digital video signal. CGMS-D information generating means 6 generates the CGMS information to be added to the video signal. The CGMS information generated in the CGMS-D information generating means 6 may be any one of "Duplication possible [00]", "Duplication possible only once [10]" and "Duplication impossible [11]".

The video signal to which the CGMS information is added in the CGMS-D information adding means 5 is then supplied to ciphering means 7. Ciphering means 7 performs a ciphering process to the video signal in accordance with CSS (Contents Scramble System) system. This ciphering process is performed prior to recording the video signal to DVD 100. In ciphering means 7, the ciphered video signal is supplied to record processing means 8. Record processing means 8 forms and then supplies the video signal to be recorded to DVD 100. The spread spectrum duplication control information is thus superimposed as a spread spectrum signal (digital watermark information) on the video signal to which the CGMS information has been added. This information is stored on DVD 100 and can be offered to users. The spread spectrum signal (SS duplication control information) does not deteriorate the quality of the video signal when it is superimposed on the video signal. Furthermore, it is very difficult to remove and tamper the digital watermark information superimposed on the video signal because this information has become integral with the video signal. Therefore, duplication control and reproduction control can be realized by requiring the detection of the SS duplication control information before reproduction.

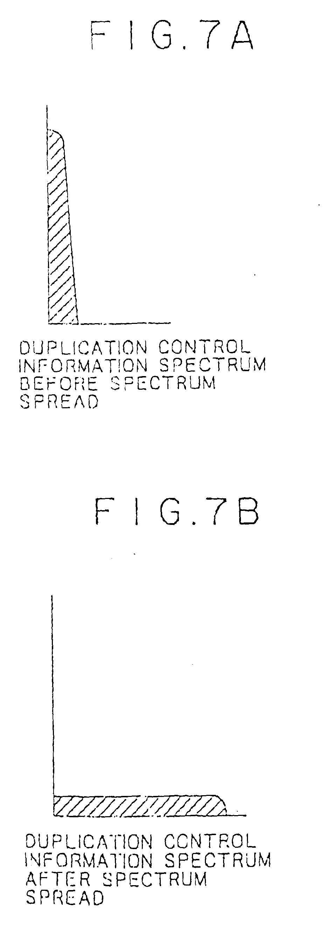

Figs. 7A-7D illustrate the relationship between the duplication control information superimposed through spectrum spreading as digital watermark information and a video signal. The duplication control information is a low bit rate signal including an amount of information for less than that of the video signal, and is represented by a narrow band signal as illustrated in Fig. 7A. When a spectrum spreading procedure is performed on this duplication control information, the information is converted to a format of a wide band signal as illustrated in Fig. 7B. In this case, the spread spectrum signal level has a low level inversely proportional to the expansion ratio of bandwidth.

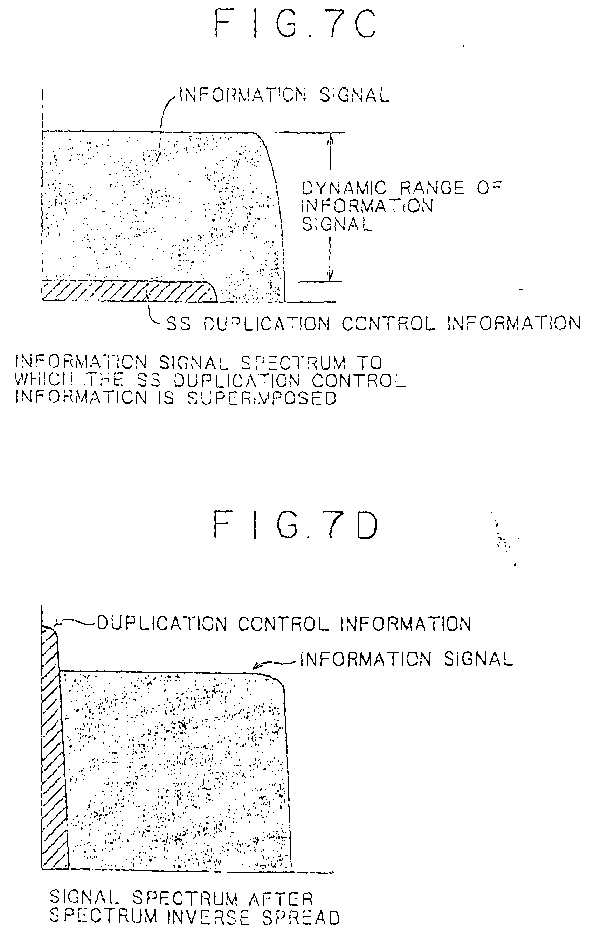

This spread spectrum signal (SS duplication control information) is then superimposed to the video signal by WM superimposing means 2. As illustrated in Fig. 7C, the SS duplication control information is superimposed at a level lower than the dynamic range of the video signal. Deterioration of the main information signal is avoided. Therefore, when the video signal on which the SS duplication control information has been superimposed is supplied to the monitor receiver for reproduction of the image, the SS duplication control information is not detected, and a good reproduced image can be obtained.

When an inverse spectrum spreading process is performed to detect the SS duplication control information, the duplication control information superimposed through the spectrum spreading process can be recovered again as the narrow band signal as illustrated in Fig. 7D. The power of the duplication control information after the inverse spread exceeds the dynamic range of the information signal by the inverse use of a sufficient band spreading coefficient, and thereby such duplication control information can be detected.

Because the SS duplication control information is superimposed on the video signal in the same time and frequency range as the video signal, it is impossible to remove and correct such SS duplication control information by frequency filtering or by simple replacement of information. Because the SS duplication control information superimposed on the video signal cannot be removed and it is difficult to tamper with such information, duplication control securely prevents illegal duplication.

In the authoring apparatus of this embodiment, as noted above, the size of the unit block BLH of the input video signal is set to be 8-pixel x 9-pixel, assuming that the input video signal is of an HDTV system, and that it is to be converted to a video signal of an SDTV system. When the video signal recorded on DVD 100 is reproduced and then converted to a video signal of an SDTV system format, a size of the unit block BLS after the signal conversion, corresponding to the unit block BLH before signal conversion to which one chip of PN code is assigned, is 3-pixels x 4-pixels in the video signal of the SDTV system. To record the video signal of SDTV system to the recording medium, the size of unit block BLS is set to 3-pixels x 4-pixels. The PN code used for the original spectrum spreading procedure is assigned to each unit block BLS for the purpose of performing an inverse spreading procedure. Accordingly, the duplication control information superimposed on the video signal as the spread spectrum signal can be detected accurately from the video signal after signal conversion.

When a video signal of an HDTV system to which duplication control information has been superimposed as a spread spectrum signal is converted to a video signal of an SDTV system, the duplication control information can be detected from the HDTV format video signal by the same detecting method as that used to detect duplication control information that might be superimposed as a spread spectrum signal on a video signal of an SDTV system. To detect the duplication control information superimposed as a spread spectrum signal on the video signal of an HDTV system, one chip of die PN code is assigned in every 8-pixel x 9-pixel unit block BLH. An inverse spreading process is then performed to accurately detect the duplication control information also from the video signal of the HDTV

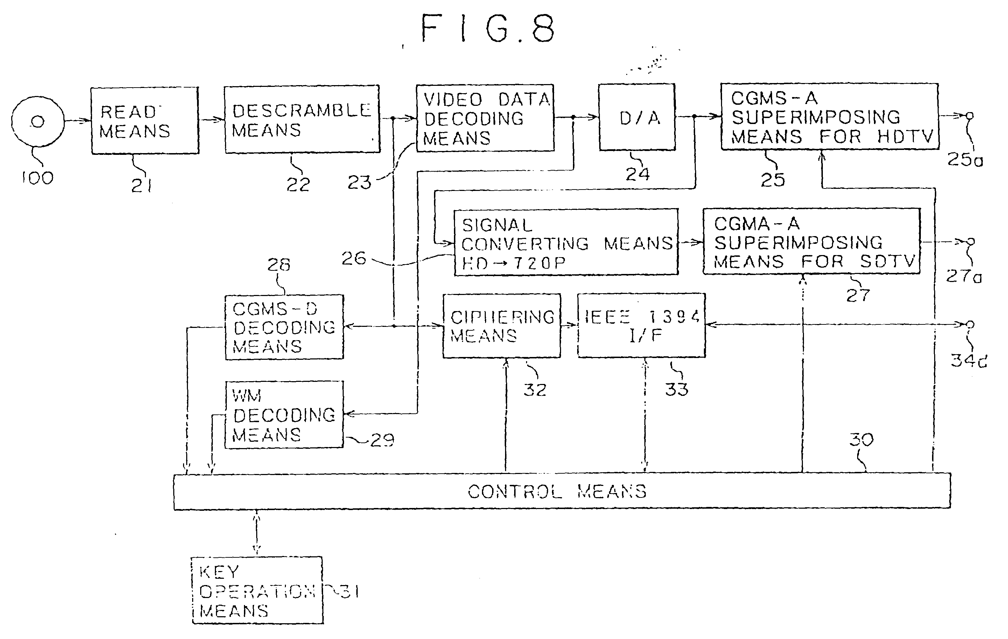

Referring next to Fig. 8, a DVD reproducing apparatus which reproduces and outputs a video signal recorded on DVD 100 by the authoring apparatus illustrated in Fig. 1 is shown. This reproducing apparatus reproduces the HDTV video signal recorded on DVD 100 and outputs an analog video signal and a digital video signal of an HDTV system format and can also reproduce the video signal of HDTV system format recorded on the DVD 100 and output this video signal as a video signal of an SDTV system format through a down conversion process.

As illustrated in Fig. 8, the reproducing apparatus of the invention comprises a readout means 21, a de-scramble means 22, a video data decoding means 23, a D/A converting circuit 24, a CGMS-A superimposing means for HDTV 25, an output terminal 25a of the analog video signal of on HDTV system format, a signal converting means 26, a CGMS-A superimposing means for SDTV 27, and output terminal 27a of analog video signal of an SDTV system format, a CGMS-D decoding means 28, a WM decoding means 29, a control means 30, a key manipulating means 31, a ciphering means 32, an IEEE 1394 interface 33 and an output terminal 34d of a digital video signal.

When an instruction to reproduce a video signal recorded on DVD 100 is given through key manipulating means 31, readout means 21 reads the video signal from DVD 100. The video signal obtained is supplied to de-scramble means 22 to perform a de-scrambling process of the video signal. The de-scrambled video signal is then supplied to video decoding means 23. Because the de-scrambled video signal was compressed according to the MPEG method upon recording, it is therefore decoded and decompressed according to the MPEG method, and may be supplied to a display monitor or the like. The video signal decoded by the MPEG method is then supplied to D/A converting circuit 24 for conversion to an analog signal, and is then supplied to CGMS-A superimposing means for HDTV 25 and signal converting circuit 26. In CGMS-A superimposing means 25. CGMS-A information is superimposed on a predetermined horizontal section of the vertical blanking period of the HDTV analog video signal based on information received from control means 30. Control means 30 superimposes CGMS-A information on the output HDTV system analog video signal based on CGMS-D information provided from CGMS-D decoding means 28 and duplication control information from WM decoding means 29. This CGMS-A information is then supplied to CGMS-A superimposing means 25 to be superimposed on the HDTV system analog video signal.

Simultaneously, upon receiving the HDTV analog signal from D/A converting circuit 24, signal converting means 26 down-converts the HDTV video signal read from DVD 100 to a video signal of an SDTV format. Namely, signal convening means 26 forms the SDTV system video signal by thinning out the lines in the vertical direction and pixels in the horizontal direction of the HDTV system video signal. Signal converting means 26 forms the SDTV system video signal by thinning out five lines in the vertical direction and five pixels in the horizontal direction in every unit block BLH to which one chip of the PN code used to form the spread spectrum signal is assigned. The formed SDTV system video signal is then supplied to CGMS-A superimposing means for SDTV 27.

CGMS-A superimposing means 27 superimposes the CGMS-A information on a predetermined horizontal section of the vertical blanking period of the SDTV system analog video signal based on information from control means 30. The information from control means 30 is generated on the basis of CGMS-D information from CGMS-D decoding means 28 and duplication control information front WM decoding means 29.

The HDTV analog video signal on which the CGMS-A information has been superimposed in CGMS-A superimposing means for HDTV 25 is then output through output terminal 25a, and the SDTV analog video signal on which the CGMS-A information has been superimposed in CGMS-A superimposing means for SDTV 27 is then output through output terminal 27a. The analog video signal output through output terminals 25a, 27a is then supplied, for example, to a display monitor apparatus and/or recording apparatus.

Additionally, the MPEG-compressed video signal output from de-scramble means 22 is provided as a digital output through an interface bus conforming to an IEEE 1394 standard. In the interface conforming to an IEEE 1394 standard, the digital information to be transmitted is ciphered in order to prevent illegal duplication. Moreover, it is also verified that an output destination is a compliant apparatus. Furthermore, the CGMS-D information received from CGMS-D decoding means 28 and duplication control information received from WM decoding means 29 are verified to determine whether the key for deciphering should be transmitted or not to the output destination. Therefore, the video signal output from de-scramble means 22 is supplied to the CGMS-D decoding means 28, where CGMS-D information included with the video signal is extracted. The 2-bit information of the CGMS-D information is extracted and is supplied to the control means 30.

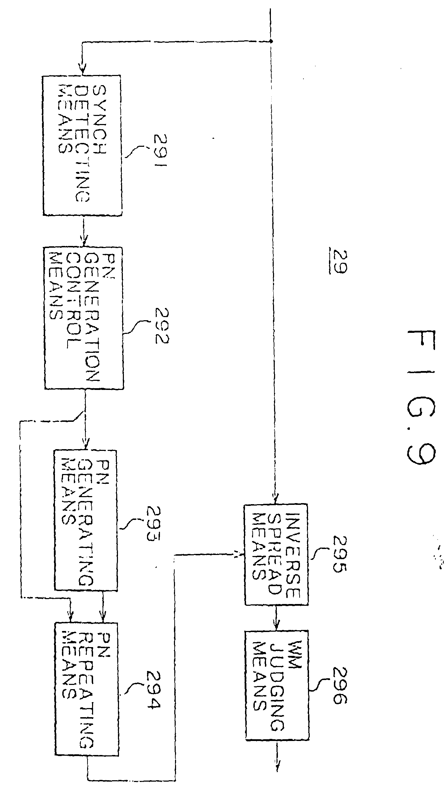

The video data output from decoding means 23 as a decoded MPEG video signal is supplied to digital watermark decoding means (hereinafter, referred to as WM decoding means) 29 to extract the spread spectrum signal included with the video signal. Fig. 9 depicts in greater detail WM decoding means 29. As is shown in Fig. 9, WM decoding means 29 comprises a synch detecting means 291, a PN code generation control means 292, a PN generating means 293, a PN repeating means 294, an inverse spreading means 295 and a WM judging means 296. Video data from video data decoding means 23 is supplied to inverse spreading means 295 and synch detecting means 291. Synch detecting means 291 detects a vertical synch timing signal V and a horizontal synch timing signal H from the supplied video data and then supplies the detected output to PN generation control means 292.

PN code generation control means 292 is structured similarly to PN code generation control means 32 illustrated in Fig. 2 of the authoring apparatus of Fig. 1. However, because this is a reproducing apparatus for reproducing an HDTV system formatted video signal recorded on a DVD, various timing signals are formed considering that the size of the unit block to which one chip of the PN code in which the spread spectrum application control information is assigned is defined as 8 pixels "m" in the horizontal direction x 9 pixels "n" in the vertical direction in the HDTV system video signal. The size of the unit block to which one chip of the PN code is assigned is therefore predetermined in PN code generation control means 292.

PN generation control means 292 uses vertical synch timing signal V and horizontal synch timing signal H from synch detecting means 291 as reference signals. PN generation control means 292 also generates, for the HDTV system video signal, enable signal EN for providing a timing signal similar to that used when the original spectrum spreading process is performed, reset signal RE, and PN clock PNCLK on the basis of the size of the unit block to which one chip of the preset PN code is assigned. These signals are supplied to PN generating means 293. Enable signal EN and PN clock signal PNCLK are also supplied to PN repeating mains 294. PN repeating means 294 is structured similarly to previously described PN repeating means 36.

In PN generating means 293, die same PN code stream PS is generated at the same time as that used for the spectrum spreading process, and is then superimposed on the video signal of the HDTV system video signal format. PN code stream PSr is therefore formed having the same timing as the spread spectrum signal of the duplication control information for every unit block of 8-pixels x 9-pixels of the HDTV video signal.

PN code stream PSr output from PN repeating means 294 is supplied to inverse spread means 295 to perform the inverse spreading process for detecting the duplication control information superimposed on the video signal. The detected output from inverse spreading means 295 is in turn supplied to WM detecting means 296 to determine the duplication control condition indicated by the detected duplication control information. This detected output is then supplied to control means 30.

Referring once again to Fig. 8, the output data from de-scramble means 22 is also supplied to ciphering means 32. Ciphering is performed to the compressed video data based on a ciphering key which is different in each communication, under the control of control means 30. The ciphering data from ciphering means 32 is supplied to an electronic device as an output destination through IEEE 1394 interface 33 and output terminal 341. IEEE 1394 interface 33 outputs the data through the data conversion conforming to relevant IEEE 1394 interface standards.

Control means 30 checks with an apparatus at the output destination through IEEE 1394 interface 33 whether the output destination apparatus is a compliant apparatus, and if so, whether such apparatus is a recording apparatus. From the CGMS information supplied from CGMS-D decoding means 28, the output of the duplication control information supplied from WM decoding means 29, and output information regarding the destination apparatus through the IEEE 1394 interface 33, control means 30 determines whether ciphering key information for deciphering in the ciphering means 32 should be transmitted to the output destination or not. When the output destination is a non-compliant apparatus, the ciphering key information is not transferred to die output destination apparatus. Even when an output destination is a compliant recording apparatus, ciphering key information is not transferred to the output destination apparatus when the CGMS information is [11] indicating "Duplication inhibited" or the duplication control information indicates "Duplication inhibited".

The recording apparatus reads the HDTV system video signal which is recorded on DVD 100 including the superimposed spread spectrum duplication control information and CGMS information. The reproducing apparatus also performs the necessary processes such as de-scramble processing (deciphering processing), expanding processing of the data-compressed digital video signal and formation of output video signal or the like. In this manner, the reproducing apparatus forms and outputs the HDTV system analog video signal to be supplied to the monitor receiver, the SDTV system analog video signal formed through down-conversion in signal converting means 26, and the HDTV system format digital video signal output through the digital interface 33. The digital video signal is output through the digital interface, and output control of the HDTV system format video signal is performed to prevent illegal duplication through the functioning of the digital interface IEEE 1394 in accordance with the spread spectrum duplication control information superimposed on the video signal, and the CGMS information. Control means 30 also determines the information to be supplied to CGMS-A superimposing means for HDTV 25 and CGMS-A superimposing means for SDTV 27, also in accordance with the CGMS-D information front CGMS-D decoding means 28, and duplication control information from WM decoding means 29. These pieces of information are then supplied to CGMS-A superimposing means 25 and CGMS-A superimposing means 27. Because adequate CGMS-A information can be added to the output analog video signal, adequate duplication control may be performed in the recording apparatus such as VTR even to a destination appliance to receive the analog signal on the basis of the CGMS-A information superimposed on the analog video signal and duplication control information superimposed through the spectrum spreading procedure. Accordingly, the authoring apparatus illustrated in Fig. 1 can accurately detect the relevant duplication control information from the video signal superimposed on the HDTV system video signal.

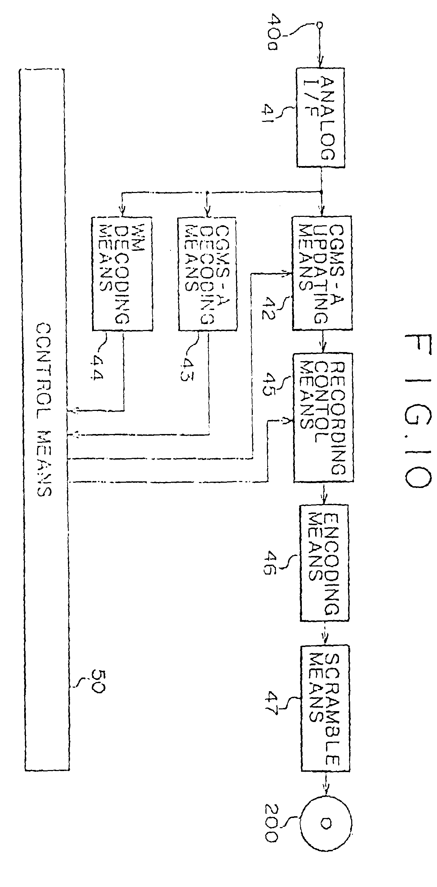

Referring next to Fig. 10, a block diagram depicting a compliant DVD recording apparatus for receiving a SDTV system video signal, and for then recording the received signal to a DVD 200, formatted as a RAM disk is shown.

As illustrated in Fig. 10, the DVD recording apparatus of an embodiment of the invention comprises an analog video signal input terminal 40a, an analog interface 41, a CGMS-A updating means 42, a CGMS-A decoding means 43, a WM decoding means 44, a recording control means 45, a compressed encoding means 46 and a scramble means 47. The SDTV system formatted analog video signal formed through signal conversion is input via analog input terminal 40a and is supplied to recording control means 45 via analog interface 41 and CGMS-A updating means 42. The analog video signal from analog interface 41 is also supplied to CGMS-A decoding means 43 and WM decoding means 44. CGMS-A decoding means 43 extracts the CGMS information superimposed on the predetermined horizontal section of the vertical blanking period of the SDTV system formatted analog video signal. WM decoding means 44 is structured similarly to WM decoding means 29 of Fig. 9 of the DVD reproducing apparatus. Therefore, in WM decoding means 44, like WM decoding means 29, the spread spectrum duplication control information is detected and the contents thereof is determined by using an inverse spectrum spreading procedure employing the PN code originally used for the spreading process.

The DVD recording apparatus of an embodiment of the invention records a received SDTV system video signal to a DVD. In WM decoding means 44, a 3-pixel x 4-pixel unit block BLS is defined. The inverse spread procedure is then performed by assigning a PN code that is the same as the PN code that was assigned to each 8-pixel x 9-pixel unit block BLH when the duplication control information was spread spectrum and superimposed on the HDTV system video signal to each unit block BLS of 3-pixel x -pixel in the DVD recording apparatus. The duplication control information can then be extracted in WM decoding means 44, and is then supplied to control means 50.

Control means 50 determines whether it is possible or not to record or duplicate the input information depending on CGMS information forwarded from CGMS-A decoding means 43 and duplication control information forwarded from WM decoding means 44. When it is determined that recording (duplication) is possible, it is also determined whether update of the CGMS-A information is necessary or not upon the recording for duplication control.

When it is determined that recording is inhibited, control means 50 controls recording control means 45 to prohibit recording of the received information. When it is determined that recording is possible or when duplication is possible only once, control means 50 controls recording control means 45 to perform the recording. Thereby, the data is converted to a digital signal, is compressed according to MPEG method in compressed encoding means 46 and is then supplied to scramble means 47.

Scramble means 47 performs a predetermined scrambling process to the MPEG-compressed video signal to it to a DVD 200. Additionally, when it has been determined that duplication of the information is allowed only once, the CGMS-A information is updated by CGMS-A update means 42.

Because the CGMS information is superimposed on a particular horizontal line of the vertical blanking period of the video signal, die updated CGMS-A information can be added to the same horizontal line of this vertical blanking period to update the copy protection information from the [10] condition to the [11] condition. While the duplication control information superimposed on the video signal is not updated, restriction of any further reproduction of the recorded information is implemented by the added duplication control information. For example, when the DVD recording medium is to act as a RAM disk allowing writing of data thereto, and the duplication control information to be recorded thereto allows only one duplication of the information, it can be determined that one recording has already been made. Thus, the duplication control information added to the vertical blanking period insures that no more duplication is allowed.

In an alternative embodiment, it is also possible to update the duplication control information actually superimposed on the video signal. The spread spectrum signal superimposed on the video signal is removed, and the updated duplication control information inhibiting further duplication is subjected to spectrum spreading process and is then newly superimposed on the video signal in accordance with any of the procedures noted above.

Alternatively, the updated duplication control information may be subjected to the spectrum spreading procedure using a PN code stream different from the previously used PN code for originally superimposing the spread spectrum duplication control information. Even if the originally superimposed spread spectrum information is not removed, the new spread spectrum signal (duplication control information) can also be superimposed on the video signal. The duplication control information pieces which are spread spectrum by different PN codes con be respectively detected by performing an inverse spreading operation using the respective desired PN code.

Because two types of duplication control information are employed, when a duplication control condition indicated by the CGMS information is different from a duplication control condition indicated by the duplication control information superimposed through the spectrum spreading procedure, recording control means 45 is controlled to use the duplication control information superimposed through spectrum spreading because of its higher reliability, thus thwarting a user from attempting in alter the duplication control information.

In accordance with the invention, while an 8-pixel x 9-pixel block has been described as being defined as the unit block in the HDTV system video signal before signal conversion, a block having a size a multiple of the block of 8-pixel x 9-pixel, for example, 16-pixel x 18-pixel (2-fold), 24-pixel x 27-pixel (3-fold), ... may also be defined as the unit block. The size of the unit block in the video signal after signal conversion is respectively defined as 6-pixel x 8-pixel (2-fold), 9-pixel x 12-pixel (3-fold), etc.

In accordance with embodiments of the invention, even when the video signal recorded to the DVD 100 is the SDTV system video signal and the assumed signal conversion is the conversion to the HDTV system video signal from the SDTV system video signal, embodiments of the present invention can also be applied. In this case, theoretically, a block having 0.375 pixels in the horizontal direction x 0.444 pixels in the vertical direction can be defined as a unit block for the SDTV system formatted video signal. The PN code of one chip is assigned to the unit block of this size in order to perform the spectrum spreading process. A block having 1-pixel in the horizontal direction x 1-pixel in the vertical direction is defined as a unit block for the video signal formatted for an HDTV system after signal conversion. A PN code that is the same as the PN code assigned to the unit block before signal conversion is assigned and used to perform an inverse spreading process. The duplication control information superimposed on the SDTV video signal before signal conversion can be accurately detected also from the HDTV video signal after signal conversion.

However, in practice it is not practical to assign the PN code of one chip to a unit block of less than one pixel in size. Therefore, in accordance wit embodiments of the invention, a block having 3-pixels in the horizontal direction x 4-pixels in the vertical direction is defined as one example of the unit block in the SDTV system formatted video signal. When the SDTV system formatted video signal is converted to an HDTV system formatted video signal, five lines in the vertical direction are interpolated and five pixels in horizontal direction are interpolated for every unit block of the SDTV system video signal. After signal conversion, a block having 8-pixels in the horizontal direction x 9-pixels in the vertical direction is defined as an example of the unit block in the HDTV signal. Thereby, the number of pixels in the horizontal and vertical directions of the unit block in both the SDTV system formatted video signal before signal conversion and the HDTV system formatted video signal after signal conversion are whole numbers. Because the PN code of one chip can be assigned to each unit block, both before and after signal conversion, the duplication control information superimposed through the spectrum spreading process can be detected.

While a block of 3-pixels x 4-pixels has been defined as the unit block in the video signal formatted for the SDTV video signal before signal conversion, the block size can also be defined as a multiple of this size, for example, 6-pixels x 8-pixels (2-fold), 9-pixels x 12-pixels (3-fold). Accordingly, the size of the unit block in the video signal after signal conversion will also be a multiple and may be set to the size of for example 16-pixels x 18-pixels (2-fold) arid 24-pixels x 27-pixels (3-fold).

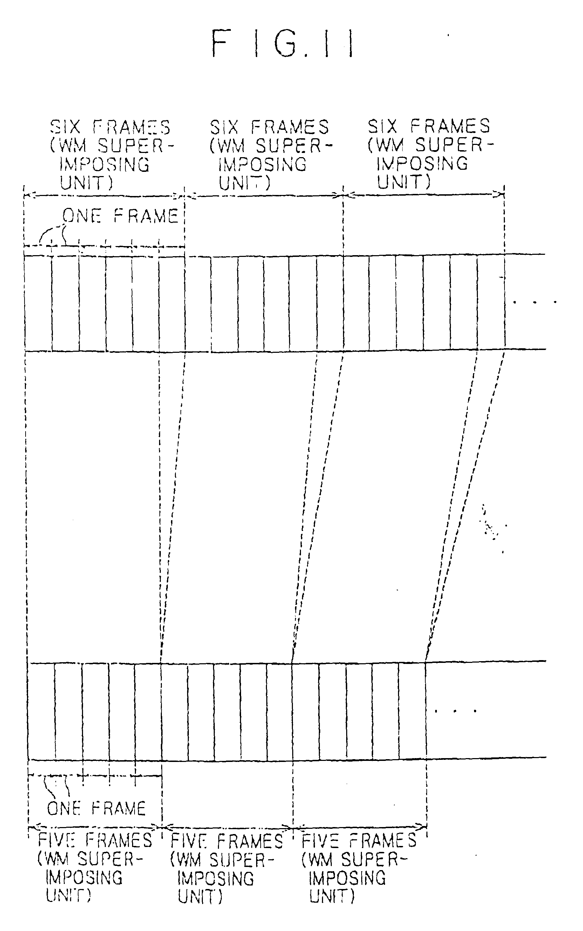

In embodiments of the present invention, signal conversion has been explained using an example where the signal is convened to the video signal of a format including a different number of lines in the vertical direction and different number of pixels in the horizontal direction. The conversion may also be made in some eases to a video signal of a format including a different frame rate. For example, a video signal of 60 frames per second may be converted to a video signal of 50 frames per second. Because the frame rate is 6:5, a multiple number of six frames is defined as the superimposing unit of the spread spectrum signal, and a portion of the spread spectrum duplication control information is superimposed in every superimposing unit. When the superimposing unit of the spread spectrum signal is set to six frames, as illustrated in Fig. 11, even if the frame is thinned, the spread spectrum duplication control information in the superimposing unit of five frames can be detected. Therefore, the spread spectrum duplication control information superimposed to the video signal before the frame rate is converted can be detected from the video signal after the frame rate is converted.

In accordance with embodiments of the invention, an HDTV system formatted video signal or an SDTV system formatted video signal is recorded to DVD 100. However, the signal conversion is not limited to the signal conversion between an HDTV system formatted video signal and an SDTV system formatted video signal. 525P and 525I video signals can also be recorded to DVD 100, as explained previously. Accordingly, the signal conversion among any of an HDTV system formatted video signal, an SDTV system formatted video signal, a 525P formatted video signal and a 525I formatted video signal is possible. Moreover, conversion among a video signal of a PAL system, a SECAM system or an NTSC signal is possible, and these signals can also be recorded.

In accordance with an additional embodiment of the invention, each video signal of any format can he converted to one or more video signals of different formats. For example, when a video signal recorded to the DVD 100 by the authoring apparatus is an HDTV system formatted video signal, this video signal may be converted to a video signal of an SDTV system formatted video signal, or a 525P formatted video signal. Accordingly, the size of the unit block in the HDTV system formatted video signal is first set for conversion of the HDTV system formatted video signal to an SDTV system formatted video signal, and thereafter the size of the unit block in the HDTV system formatted video signal is thereafter set for conversion of the HDTV system formatted video signal to a 525P formatted video signal.

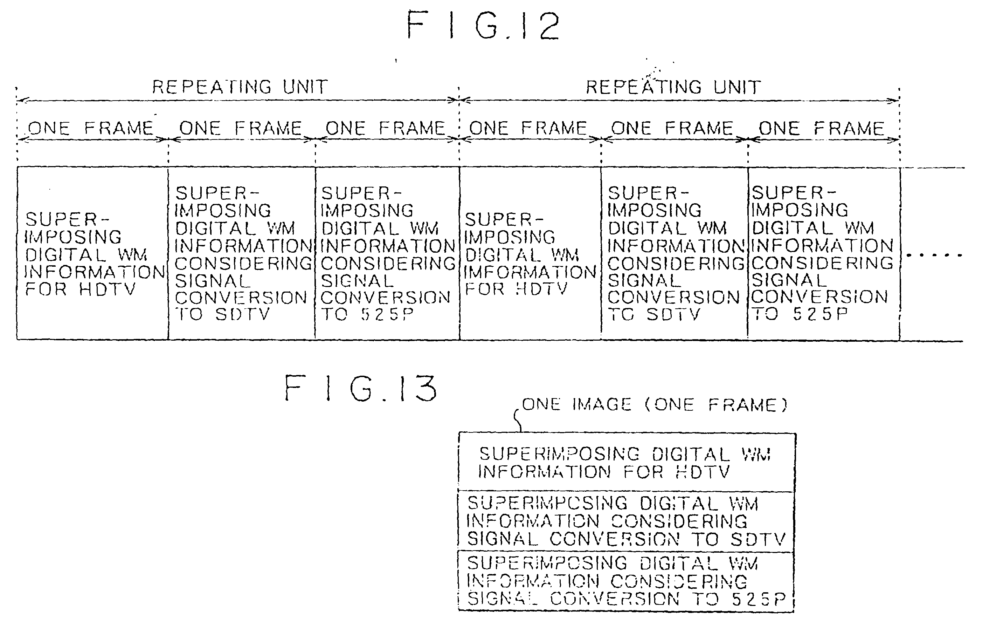

As illustrated in Fig. 12, the size of a unit block to which the PN code of one chip is defined separately in each frame. First, it is assumed that the HDTV signal will not be converted. The unit block for the HDTV system formatted video signal is thus defined and the spread spectrum duplication control information is superimposed thereon by assigning the PN code of one chip in every unit block. In the next frame, a unit block is defined for the HDTV signal to be converted to an SDTV system formatted video signal. In the next frame, a unit block is defined for the HDTV signal to be converted to a 525P formatted video signal.

Therefore, when a video signal recorded to DVD 100 is to be converted to a plurality of video signal formats, a unit block in the HDTV formatted system video signal before signal conversion is set based on the formats of each of the formats of the video signals to which the HDTV video signal is to be converted. The spread spectrum duplication control information can therefore be detected by each of a plurality of predetermined methods depending on the format of video signal before and after conversion. The format of the defined unit blocks may be changed only every plurality of blocks, rather than for each block. In addition, as illustrated in Fig. 13, it is also possible that each frame is divided to include different sized unit blocks. The unit, blocks of different sizes are assigned to the divided areas and the PN code of one chip is assigned to each formatted unit block for superimposing the spread spectrum duplication control information on each unit block.

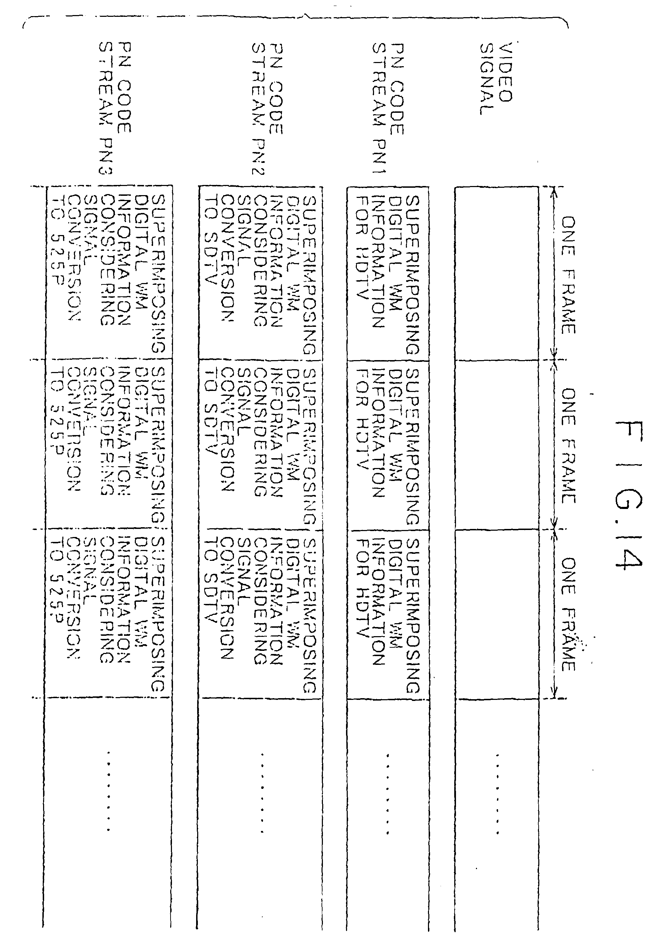

When the spread spectrum duplication control information is superimposed on the video signal to be recorded to DVD 100 as illustrated in Figs. 11 and 12, a plurality of watermark forming means 3, for example, are provided in the apparatus of Fig. 1. The size of each unit block is set in each watermark forming means. An output of each watermark forming means is supplied to watermark superimposing means 2 for superimposition on the appropriate portion of the various frames of the video signal to be recorded. The information indicating the size of preset different unit blocks is supplied to PN generation control means 32 of the apparatus of Fig. 1 to form the enable signal EN, PN clock signal PNCLK depending on the size of the respective unit blocks for every frame or for a plurality of horizontal lines of every frame. The PN codes of different, series are assigned to the same time area of the video signal before signal conversion in every preset unit block of each of the different sizes as illustrated in Fig. 14 for the purpose of superimposing of the spread spectrum duplication control information. For example, a plurality of watermark forming means 3 is provided in authoring apparatus illustrated in Fig. 1. In each PN generating means of the watermark forming means, the PN codes of different series are generated. The different sizes of each of the unit blocks are set in each watermark forming means, and an output of each watermark forming means is supplied to the watermark superimposing means 2.

Moreover, signal conversion is not limited to the examples explained above. For instance, when a video signal having a number of pixels in the horizontal direction x number of lines in the vertical direction x frame rate is (2k x 2m x 2n) is converted to a video signal of k x m x n, k x m x n is defined as a unit in the video signal of 2k x 2m x 2n and the spread spectrum duplication control information (superimposing data) is superimposed in every k x m x n. Thereby, the duplication control information can be detected accurately from the video signal after signal conversion. Data is therefore superimposed in all possible dimensions.

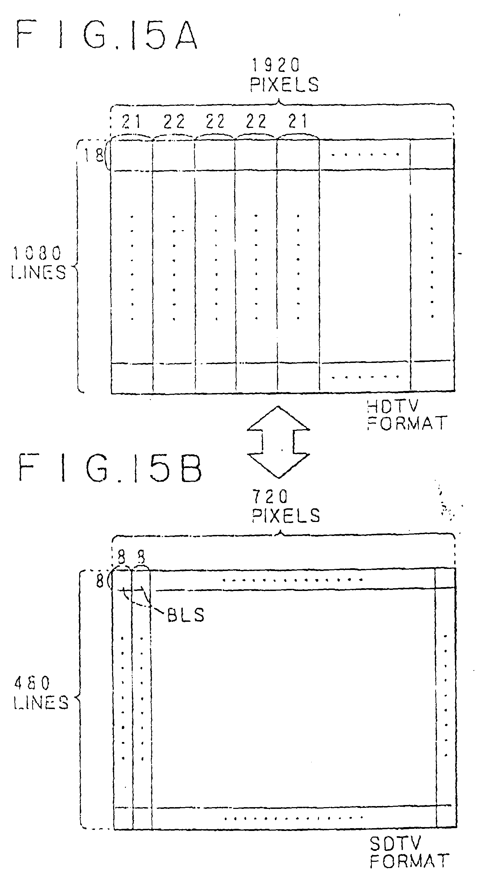

In accordance with embodiments of the invention, when the spread spectrum duplication control information is detected after the HDTV system video signal has been convened to the SDTV system video signal, the duplication control information is detected as illustrated in Fig. 15B. Here, the spread spectrum duplication control information has been superimposed by assigning the PN code of one chip to a block having 8-pixels in the horizontal direction x 8-pixels in the vertical direction. The PN code of one chip is assigned to the HDTV system video signal before signal conversion using a block size of 21.33-pixels x 18-pixels.

In this case, the duplication control information can be detected from the 8-pixel x 8-pixel blocks after signal conversion of the HDTV system formatted video signal to the SDTV system formatted video signal. The number of pixels in each unit block in the HDTV system video signal is not indicated by a constant whole number, but rather the number of pixels in the horizontal direction is 21 pixels or 22 pixels as illustrated in Fig. 15A.

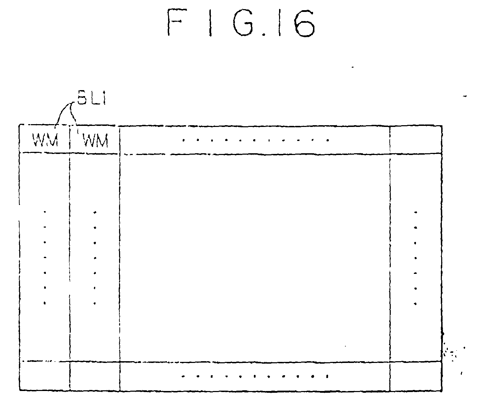

As is illustrated in Fig. 16, in accordance with an embodiment of the invention, the digital watermark pattern is superimposed in every unit block of a signal. BL1 represents a unit block of a predetermined size, while WM represents a predetermined digital watermark information pattern. Even when a single digital watermark information pattern is used, the size of a unit block for superimposing the digital watermark information pattern to the video signal before signal conversion is set based on the format of the video signal before signal conversion and the format of the video signal after signal conversion. The predetermined digital watermark information pattern is superimposed on each unit block conforming to the size of preset unit block. Thereby, even if the lines in the vertical direction and pixels in the horizontal direction are thinned and interpolated in every unit block by signal conversion of the video signal, the digital watermark information pattern superimposed to the video signal before signal conversion can be detected from the video signal after signal conversion. Even when signal conversion is performed, for example, between an HDTV system formatted video signal and an SDTV system formatted video signal, an NTSC system formatted video signal and a PAL formatted system video signal, or formats of video data exchanged among computers, for example, CIF (Common Intermediate Format) and QCIF (Quarter Common Intermediate Format), the digital watermark information superimposed to the video signal before signal conversion can be accurately detected from the video signal after signal conversion.

A video signal output apparatus can be structured almost in the same manner as the apparatus illustrated in Fig. 1. For example, a broadcast apparatus which can broadcast a signal can be formed by replacing the record processing means 8 of the authoring apparatus illustrated in Fig. 1 with the signal output means for broadcasting the video signal. Thus, the spread spectrum duplication control information is transmitted along with the broadcast signal by superimposing it in such a manner so that it can be detected even after signal conversion to a broadcast video signal format by using the video signal output apparatus of embodiments of the present invention in the broadcast apparatus. Moreover, the video signal output apparatus of embodiments of the present invention can be applied to any information apparatus which communicates through the network, for example, a personal computer provided with a communication function. Existing broadcast apparatus and authoring apparatus can be modified to detect and interpret the superimposed digital watermark information.

In the above explanations of the invention, a PN code is used as the spreading code to form the spread spectrum signal, but the present invention is not limited thereto. Various spread codes may be used to form the spread spectrum signal which contains the digital watermark information. The digital watermark information is not limited only to a spread spectrum signal. Additional information can be superimposed on the video signal by utilizing various digital watermark information pieces formed by any number of digital watermark techniques.

In addition, the information superimposed on the video signal through the spectrum spreading process is not limited to duplication control information. Various kinds of additional information such as copyright in formation may be superimposed on the video signal as the digital watermark information.

Moreover, when the video signal on which the digital watermark information is superimposed is a digital signal, the digital watermark information is superimposed, as explained previously, to the digital signal before MPEG encoding. However, it can be superimposed on the digital signal after MPEG encoding.

As explained previously, according to the digital watermark information superimposing method of the present invention, the digital watermark information can be superimposed on the video signal before signal conversion so that if the video signal is converted to the video signal of another format, the digital watermark information superimposed on the video signal can be accurately detected from the video signal after signal conversion.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A method for superimposing digital watermark information to a video signal, comprising the steps of:
determining before conversion a format of a video signal that is to have digital watermark information superimposed thereon;
determining a format of the video signal after conversion thereof;
determining a unit block size of said video signal before conversion that includes a whole number of pixels in both horizontal and vertical directions so that when said video signal before conversion is converted to said format of said video signal after conversion, said conversion being accompanied selectively by an interpolating process or a thinning process in said horizontal direction or said vertical direction or a time direction between consecutive frames or fields, a resulting unit block size of said video signal after conversion also includes a different whole number of pixels in both the horizontal and vertical directions.

2. The method of claim 1, wherein said digital watermark information is superimposed in every block unit of said video signal before conversion within an area of a part of one image of said video signal defined as one block and the block after said signal conversion also includes a different whole number of pixels in both the horizontal and vertical directions.

3. The method of claim 1, wherein said digital watermark information is superimposed in every block unit of a part of one image of said video signal defined as one block, the block before signal conversion including a whole number of pixels in the horizontal and vertical directions and the block after said signal conversion including a whole number of pixels in the horizontal and vertical directions.

4. The method of claim 2, wherein said digital watermark information is a spread spectrum signal formed by using a PN spread code, one chip of said PN spread code being assigned in everyone of said blocks.

5. The method of claim 1, wherein said digital watermark information is a predetermined unit digital watermark information pattern.

6. The method of claim 1, wherein said conversion is selectively to a standard television signal from a high definition television signal or conversion to a high definition television signal from a standard television signal.

7. The method of claim 1, wherein said conversion is selectively to a second standard television signal from a first standard television signal or a second high definition television signal from a first high definition television signal.

8. The method of claim 1, wherein a plurality of digital watermark information signals in accordance with a plurality of different formats of video signals to which said video signal is to be converted are superimposed on said video signal.

9. The method of claim 1, wherein respective digital watermark information signals corresponding to a plurality of different formats of video signals to which said video signal is to be converted are superimposed to a plurality of areas of said video signal divided in space or time.

10. The method of claim 1, wherein said digital watermark information is formed using a plurality of different spread codes corresponding to a plurality of different formats of video signals to which said video signal is to be converted, said digital watermark information being superimposed on said video signal in a common area.

11. A method for transmitting a video signal including digital watermark information superimposed thereon, and for detecting said digital watermark information after a signal conversion of said video signal, comprising the steps of:
determining before conversion a format of a video signal that is to have digital watermark information superimposed thereon;
determining a format of the video signal after conversion thereof;
determining a unit block size of said video signal before conversion that includes a whole number of pixels in both horizontal and vertical directions so that when said video signal before conversion is converted to said format of said video signal after conversion, said conversion being accompanied selectively by an interpolating process or a thinning process in said horizontal direction or said vertical direction or a time direction between consecutive frames or fields, a resulting unit block size of said video signal after conversion also includes a different whole number of pixels in both the horizontal and vertical directions;
determining an intended format of said digital watermark information after conversion of said video signal; and
comparing said intended format of said digital watermark information to said digital watermark information superimposed on said video signal after conversion to detect said superimposed digital watermark information after conversion.

12. The method of claim 11, wherein said digital watermark information is superimposed in every block unit of said video signal before conversion within an area of a part of one image of said video signal defined as one block and the block after said signal conversion also includes a different whole number of pixels in both the horizontal and vertical directions.

13. The method of claim 11, wherein said digital watermark information is superimposed in every block unit of a part of one image of said video signal defined as one block, the block before signal conversion including a whole number of pixels in the horizontal arid vertical directions and the block after said signal conversion includes a whole number of pixels in the horizontal and vertical directions.

14. The method of claim 12, wherein said digital watermark information is a spread spectrum signal formed by using a PN spread code, one chip of said PN spread code being assigned in everyone of said blocks.

15. The method of claim 11, wherein said digital watermark information is a predetermined unit digital watermark information pattern.

16. The method of claim 11, wherein said conversion is selectively to a standard television signal from a high definition television signal or conversion to a high definition television signal from a standard television signal.

17. The method of claim 11, wherein said conversion is selectively to a second standard television signal from a first standard television signal or a second high definition television signal from a first high definition television signal.

18. The method of claim 11, wherein a plurality of digital watermark information signals in accordance with a plurality of different formats of video signals to which said video signal is to be convened are superimposed on said video signal.

19. The method of claim 11, wherein respective digital watermark information signals corresponding to a plurality of different formats of video signals to which said video signal is to be converted are superimposed to a plurality of areas of said video signal divided in space or time.

20. The method of claim 11, wherein said digital watermark information is formed using a plurality of different spread codes corresponding to a plurality of different formats of video signals to which said video signal is to be converted, said digital watermark information being superimposed on said video signal in a common area.

21. A digital watermark information superimposing apparatus, comprising:
digital watermark information generating means for generating digital watermark information to he superimposed on a video signal;
means for determining before conversion a format of a video signal that is to have digital watermark information superimposed thereon;
means for determining a format of the video signal after conversion thereof;
means for determining a unit block size of said video signal before conversion that includes a whole number of pixels in both horizontal and vertical directions so that when said video signal before conversion is converted to said format of said video signal after conversion, said conversion being accompanied selectively by an interpolating process or a thinning process in said horizontal direction or said vertical direction or a time direction between consecutive frames or fields, a resulting unit block size of said video signal after conversion also includes a different whole number of pixels in both the horizontal and vertical directions; and
digital watermark information superimposing means for superimposing said digital watermark information front said digital watermark information generating means on said video signal.

22. The digital watermark information superimposing apparatus of claim 21, wherein said digital watermark information is superimposed in every block unit of said video signal before conversion within an area of a part of one image of said video signal defined as one block, and wherein said digital watermark information generating means superimposes said digital watermark information to a block before said signal conversion so that a corresponding block after said signal conversion includes a different whole number of pixels in the horizontal and vertical directions.

23. The digital watermark information superimposing apparatus of claim 21 wherein said digital watermark information is superimposed in every block unit of a part of one image of said video signal defined as one block, and wherein said digital watermark information generating means superimposes said digital watermark information to a block including a whole number of pixels before said signal conversion, so that the block after said signal conversion includes a different whole number of pixels in the horizontal and vertical directions.

24. The digital watermark information superimposing apparatus of claim 23, wherein said digital watermark information generating means assigns one chip of a PN spread code in every one of said blocks and forms a spread spectrum signal as the digital watermark information using this spread code.

25. The digital watermark information superimposing apparatus of claim 23, wherein said digital watermark information generating means generates the predetermined unit digital watermark information pattern to be assigned to every said block.

26. The digital watermark information superimposing apparatus of claim 21, wherein said conversion is selectively to a standard television signal from a high definition television signal or conversion to a high definition television signal from a standard television signal.

27. The digital watermark information superimposing apparatus of claim 21, wherein said conversion is selectively to a second standard television signal from a first standard television signal or a second high definition television signal from a first high definition television signal.

28. The digital watermark information superimposing apparatus of claim 21, wherein
said digital watermark information generating means forms said digital watermark information corresponding to a plurality of different video signal formats to which said video signal is to be converted; and
said digital watermark information superimposing means superimposes, in every area of said video signal divided in space or time, respective digital watermark information signals corresponding to said different formats.

29. The digital watermark information superimposing apparatus as claimed in claim 21, wherein:
said digital watermark information generating means forms a digital watermark information corresponding to a plurality of different formats to which said video signal is to be converted; and
said digital watermark information superimposing means superimposes respective digital watermark information signals formed using different spread codes in a common area of said video signal.

30. An authoring apparatus, comprising:
digital watermark information generating means for generating digital watermark information to be superimposed on a video signal;
means for determining before conversion a format of a video signal that is to have digital watermark information superimposed thereon;
means for determining a format of the video signal after conversion thereof; and
means for determining a unit, block size of said video signal before conversion that includes a whole number of pixels in both horizontal and vertical directions so that when said video signal before conversion is converted to said format of said video signal after conversion, said conversion being accompanied selectively by an interpolating process or a thinning process in said horizontal direction or said vertical direction or a time direction between consecutive frames or fields, a resulting unit block size of said video signal after conversion also includes a different whole number of pixels in both the horizontal and vertical directions.

31. The authoring apparatus as claimed in claim 30, wherein
said digital watermark information is superimposed in every block unit of said video signal before conversion within a part of one image of said video signal defined as one block; and
said digital watermark information generating means superimposes said digital watermark information to a block before said signal conversion so that a corresponding block after said signal conversion includes a different whole number of pixels in the horizontal and vertical directions.

32. The authoring apparatus of claim 30, wherein
said digital watermark information is superimposed in every block unit of a part of one image of said video signal defined as one block; and
said digital watermark information generating means superimposes said digital watermark information in every block including a whole number of pixels before said signal conversion, wherein the block after said signal conversion includes a different whole number of pixels in the horizontal and vertical directions.

33. The authoring apparatus as claimed in claim 32, wherein said digital watermark information generating means assigns one chip of a spread code in every one of said blocks and forms a spread spectrum signal as the digital watermark information using this spread code.

34. The authoring apparatus of claim 32, wherein, said digital watermark information generating means generates a predetermined unit digital watermark information pattern to be assigned in every said block.

35. The authoring apparatus of claim 30, wherein said conversion is selectively to a standard television signal front a high definition television signal or conversion to a high definition television signal from a standard television signal.

36. The authoring apparatus of claim 30, wherein said conversion is selectively to a second standard television signal from a first standard television signal or a second high definition television signal from a first high definition television signal.

37. The authoring apparatus of claim 30, wherein
said digital watermark information generating means generates digital watermark information corresponding to a plurality of different formats to which said video signal is to be converted; and
a digital watermark information superimposing means superimposes said generated digital watermark information to an area of said video signal divided in space or time.

38. The authoring apparatus of claim 30, wherein
said digital watermark information generating means forms a plurality of digital watermark information signals corresponding to a plurality of different formats to which said video signal is to be converted, using a different spread code for generating each digital watermark signal; and
a digital watermark information superimposing means superimposes a plurality of digital watermark information corresponding to said plurality of said different formats in a common time area of the video signal.

39. A video signal output apparatus, comprising:
digital watermark information generating means for generating digital watermark information to be superimposed to a video signal;
means for determining before conversion a format of a video signal that is to have digital watermark information superimposed thereon;
means for determining a format of the video signal after conversion thereof;;
means for determining a unit block size of said video signal before conversion that includes a whole number of pixels in both horizontal and vertical directions so that when said video signal before conversion is converted to said format of said video signal after conversion, said conversion being accompanied selectively by an interpolating process or a thinning process in said horizontal direction or said vertical direction or a time direction between consecutive frames or fields, a resulting unit block size of said video signal after conversion also includes a different whole number of pixels in both the horizontal and vertical directions;
digital watermark information superimposing means for superimposing, to said video signal before conversion, said digital watermark information from said digital watermark information generating means; and
output means for outputting said video signal on which said digital watermark information has been superimposed.

40. The video signal output apparatus of claim 39, wherein
said digital watermark information is superimposed in every block unit of said video signal before conversion within a part of one image of said video signal defined as one block; and
said digital watermark information generating means superimposes said digital watermark information to a block before said signal conversion so that a corresponding block after said signal conversion includes a different whole number of pixels in the horizontal and vertical directions.

41. The video signal output apparatus of claim 39, wherein said digital watermark information is superimposed in every block unit of a part of one image of said video signal defined as one block; and
said digital watermark information generating means superimposes said digital watermark information in every block including a whole number of pixels before said signal conversion, wherein to block after said signal conversion includes a different whole number of pixels in the horizontal and vertical directions.

42. The video signal output apparatus of claim 40, wherein said digital watermark information generating means assigns one chip of a spread code in every one of said blocks and forms a spread spectrum signal as the digital watermark information using this sprawl code.

43. The video signal output apparatus of claim 40, wherein said digital watermark information generating means generates a predetermined unit digital watermark information pattern to be assigned in every said block.

44. The video signal output apparatus of claim 39, wherein said conversion is selectively to a standard television signal from a high definition television signal or conversion to a high definition television signal from a standard television signal.

45. The video signal output apparatus of claim 39, wherein said conversion is selectively to a second standard television signal from a first standard television signal or a second high definition television signal from a first high definition television signal.

46. The video signal output apparatus of claim 39, wherein
said digital watermark information generating means generates digital watermark information corresponding to a plurality of different formats to which said video signal is to be converted; and
said digital watermark information superimposing means superimposes said generated digital watermark information to an area of said video signal divided in space or time.

47. The video signal output apparatus of claim 39, wherein
said digital watermark information generating means forms a plurality of digital watermark information signals corresponding to a plurality of different formats to which said video signal is to be converted, using a different spread code for generating each digital watermark signal; and
said digital watermark information superimposing means superimposes a plurality of digital watermark information corresponding to said plurality of said different formats in a common time area of said video signal.
